# FASCICULE DE BREVET EUROPEEN

(11) **EP 1 701 777 B1**
(45) Date de publication et mention de la délivrance du brevet: **23.09.2009**
(21) Numéro de dépôt: 04786272.7
(22) Date de dépôt: 05.08.2004
(51) Int. Cl.: B01D 53/22, B01D 71/02, B01D 69/10, C01B 3/50

(54) **ASSEMBLAGE D'UNE MEMBRANE DE SEPARATION DE GAS SUR UN SUPPORT**
VERBUND MIT EINER GASTRENNMEMBRAN AUF EINEM TRÄGER
ASSEMBLY WITH A GAS SEPARATION MEMBRANE ON A SUPPORT

(30) Priorité: 11.08.2003 FR 0309812
(43) Date de publication de la demande: 20.09.2006
(73) Titulaire: Compagnie Européenne des Technologies de l'Hydrogène (CETH), 91460 Marcoussis (FR)
(72) Inventeur: PUYENCHET, Christophe, F-75013 Paris (FR); DESCHAMPS Arnaud, FR-91570 Bievres (FR)
(74) Mandataire: de Saint-Palais, Arnaud Marie
(86) Numéro de dépôt international: PCT/FR2004/002099
(87) Numéro de publication internationale: WO 2005/016494

(56) Documents cités:
- DD-A- 269 787
- GB-A- 1 185 561
- GB-A- 1 256 153
- US-B1- 6 602 325
- PATENT ABSTRACTS OF JAPAN vol. 0171, no. 67 (C-1043), 31 mars 1993 (1993-03-31) & JP 04 326931 A (MITSUBISHI KAKOKI KAISHA LTD), 16 novembre 1992 (1992-11-16)
- PATENT ABSTRACTS OF JAPAN vol. 2000, no. 13, 5 février 2001 (2001-02-05) & JP 2000 296316 A (ISHIKAWAJIMA HARIMA HEAVY IND CO LTD NIPPON METAL IND CO LTD), 24 octobre 2000 (2000-10-24)
- PATENT ABSTRACTS OF JAPAN vol. 2000, no. 01, 31 janvier 2000 (2000-01-31) & JP 11 276867 A (TOKYO GAS CO LTD), 12 octobre 1999 (1999-10-12)

## Description

La présente invention concerne un assemblage d'une membrane d'extraction sur un support. Elle s'applique plus particulièrement, mais non exclusivement, à la purification de gaz tel que l'hydrogène pour son utilisation en microélectronique, en chromatographie gazeuse ou encore dans des piles à combustible.

De façon générale, pour obtenir un flux de gaz élevé à travers une membrane de filtration sélective, il est nécessaire de simultanément satisfaire les quatre conditions suivantes :
- le matériau constitutif de la membrane doit être très sélectif et très perméable au gaz à extraire ;
- la membrane doit être aussi mince que possible, le flux de gaz filtré étant une fonction inverse de son épaisseur;
- la différence des pressions partielles du gaz à prélever doit être aussi élevée que possible entre l'amont et l'aval de la membrane, l'efficacité de la filtration dépendant directement de cette différence de pressions ;
- la surface de la membrane doit être aussi grande que possible.

Par ailleurs, on sait également que dans le cas particulier des processeurs de gaz combustibles, la température dans la chambre de réaction est élevée (généralement de 300 à 600°C) et que, de ce fait, le seul matériau réellement efficace pour la réalisation d'une membrane destinée à opérer dans cette plage de températures est du palladium ou un alliage à base de palladium, dont il est nécessaire pour des raisons économiques évidentes de diminuer la quantité totale.

En outre, dans le cas des générateurs d'hydrogène pur aisément transportables que recherche l'industrie automobile pour construire des voitures à traction électrique équipées de piles à combustible du type à membranes échangeuses de protons (PEM), il est impératif que, pour les puissances de 50 à 100 kW électriques nécessaires, le volume total occupé par les structures composites de membranes et, donc, par la chambre de réaction où elles sont installées, soit aussi réduit que possible.

Afin de réaliser des membranes aussi minces que possible et cependant relativement grandes, différents chercheurs ont proposé de fabriquer des structures composites, constituées d'une couche mince de palladium ou d'alliage de palladium déposée sur un substrat rigide perméable résistant à la pression du milieu.

Le brevet GB 1 256 153 décrit un assemblage de cellules de diffusion comprenant chacune un ou plusieurs disques de diffusion supportés par un support collecteur par l'intermédiaire d'un empilage comportant successivement un écran métallique alvéolé et une ou plusieurs feuilles de carbone.

Le brevet US 2 958 391, accordé à A.J. Derosset, décrit une structure composite de membrane sélectivement perméable à l'hydrogène qui comprend une couche mince de palladium ou d'alliage de palladium, directement déposée sur un substrat métallique fritté poreux, en forme de plaque ou de cylindre allongé. En principe, seul l'hydrogène filtre à travers la membrane formée par la couche mince et pénètre dans le substrat poreux perméable relié à un conduit collecteur. Ce type de structures a pour avantage évident, dès lors que la couche de filtration est suffisamment épaisse pour être réellement efficace et que le substrat fritté possède une résistance mécanique suffisante malgré sa porosité, de satisfaire les quatre conditions énoncées plus haut.

Ce type de structures présente cependant quelques défauts. Le premier est le risque de laisser se former des micro-trous dans la couche mince filtrante, du fait de la rugosité relativement importante de la paroi du substrat. Une telle rugosité résulte de la taille relativement importante des grains métalliques utilisés qui est imposée par la perméabilité minimale recherchée pour le substrat poreux. Le deuxième a son origine dans le fait que le document ne prévoit pas, pour constituer le substrat, de choisir un métal présentant un coefficient de dilatation thermique compatible avec celui, relativement faible, de la couche de filtration, à savoir 11,8.10⁻⁶/°C pour le palladium. Cela, afin de ne pas diminuer la sélectivité de la perméabilité de cette couche, en y provoquant des micro-fissures dues à des dilatations différentielles dommageables.

En outre, dans le cas où le mélange gazeux, comprenant l'hydrogène à filtrer, est à une température et une pression élevées, les quatre conditions nécessaires visées ci-dessus ne sont pas suffisantes pour une structure comprenant une couche de filtration déposée sur un substrat. En effet, il faut également qu'aux températures et aux pressions élevées en question (généralement de 300 à 700°C et de 3 à 50 bars), le métal du substrat ne s'évapore pas. Les vapeurs métalliques pourraient se condenser sur le métal de la couche filtrante, ce qui aurait pour conséquence de notablement diminuer la perméabilité de la membrane à l'égard de l'hydrogène. Ce qui signifie aussi qu'il est impératif que les deux métaux en contact soient chimiquement stables l'un par rapport à l'autre, aux températures et pressions concernées.

Le brevet US 5 498 278, accordé à D.J. Edlund, propose une solution à ces différents problèmes. Pour cela, la structure composite décrite comprend trois éléments : (1) une couche intermédiaire poreuse souple, non frittée, texturée, stable aux points de vue chimique et thermique, disposée entre (2) une couche métallique mince, sélectivement perméable à l'hydrogène, par exemple, en palladium ou en un alliage de palladium, d'argent et/ou de nickel, et (3) un substrat nu perméable.
La couche intermédiaire en question est une pellicule tissée ou non tissée réalisée, par exemple, en fibres d'alumine, de silice, de verre ou de carbone. Elle sépare totalement la couche filtrante extérieure du substrat rigide perméable intérieur et les rend totalement indépendants l'un de l'autre. Toute considération de compatibilité directe, notamment chimique ou thermique, entre le matériau de la couche filtrante et celui du substrat est, en principe, écartée parce que pratiquement inutile, du fait de la présence de cette couche intermédiaire particulière faisant office de barrière. Le substrat pourra en conséquence être plus ou moins quelconque et, par exemple, être réalisé en métal plein ou en céramique dense, rendu perméable par des découpes ou des perforations. Dans une telle structure, la couche filtrante et la couche intermédiaire souple ont, d'après le document, une efficacité maximale lorsqu'elles comportent des micro-ondulations dans deux directions orthogonales qui leur permettent d'opérer comme des micro-soufflets, adaptés à absorber tout déplacement différentiel par rapport au substrat. De telles dispositions présentent toutefois un défaut majeur qui est la conséquence directe de la nature non-métallique de la couche intermédiaire. En effet, cela rend impossible toute vraie soudure de la couche filtrante métallique et de la couche intermédiaire qui ne l'est pas. La fixation réciproque de ces deux couches de natures différentes ne peut être qu'une sorte de collage à efficacité et stabilité relatives. Dans ces conditions, à la fin d'une durée d'utilisation relativement courte, comportant des périodes d'arrêt et de fonctionnement successives, la couche de filtration, qui subit des contractions et des expansions thermiques relativement importantes par rapport à celles, pratiquement nulles, de la couche intermédiaire, se décollera inévitablement de son support et deviendra rapidement fragile, puis fissurée et finalement inopérante. Une situation identique se présenterait si le corps du substrat et la couche intermédiaire étaient, l'un et/ou l'autre, réalisés en céramique, par ailleurs fragile et cassante.

On constate donc qu'un des problèmes de réalisation des membranes réside dans la technique utilisée pour maintenir assemblées les différentes couches. En effet, le collage n'est pas une solution stable dans le temps. Quant au soudage classique c'est-à-dire TIG (Tungsten Inert Gaz) ou MIG (Metal Inert Gaz), il présente l'inconvénient d'avoir une zone avec une température importante et peu localisée ce qui entraîne des contraintes aboutissant à des cisaillements ou des déformations rendant la membrane inutilisable.

L'invention a pour objet de résoudre ces inconvénients.

A cet effet, elle propose un assemblage d'une membrane d'extraction sur un support,
ladite membrane comprenant au moins une couche métallique poreuse support et au moins une couche métallique sélectivement perméable audit gaz recouvrant la couche poreuse au moins sur une face et s'étendant au-delà de cette couche poreuse support,
ledit support comprenant au moins deux pièces métalliques usinées de maintien de la membrane.

Selon l'invention, cet assemblage est **caractérisé en ce que** la couche métallique sélectivement perméable est prise en étau entre les deux pièces métalliques usinées et en ce qu'il comprend un premier cordon de soudure de type bord à bord à haute énergie entre l'une des pièces usinées et une extrémité de la couche poreuse support et un deuxième cordon de soudure, de type bord à bord à haute énergie entre les deux pièces usinées et une zone de la couche métallique sélectivement perméable dépassant la couche poreuse support entre lesdites pièces usinées.

Avantageusement et contrairement aux procédés de soudage conventionnels, les procédés de soudage à haute énergie ne réalisent pas la fusion des matériaux à souder par transfert thermique de la surface vers l'intérieur de la pièce, mais bénéficient de la formation d'un capillaire permettant un transfert direct de l'énergie au coeur de la matière et ainsi l'obtention de cordons de soudure beaucoup moins larges que pénétrants ce qui permet :
- de souder une feuille métallique mince sur un métal dense sans l'endommager,
- d'éviter les cisaillements,
- de réaliser un assemblage parfaitement étanche.

Ledit soudage à haute énergie pourra consister en un soudage au moyen d'un faisceau d'électrons.
L'avantage de ce procédé provient de la très haute concentration de puissance dans le joint : les déformations de soudage sont minimisées grâce à la finesse du cordon et à sa géométrie régulière à bords parallèles.
Ledit procédé est caractérisé par une concentration très importante d'énergie: cette concentration thermique du faisceau, très focalisé, permet d'obtenir des densités de puissance de l'ordre de 10 à 100 MW par cm².
Le principe de base du procédé est la transformation de l'énergie cinétique d'un faisceau d'électrons en énergie calorifique.
Le processus de soudage est réalisé dans une chambre à vide de l'ordre de 10⁻⁶ mbar à 10⁻⁷ mbar pour protéger contre l'oxydation les pièces soudées sans gaz d'apport.
Le faisceau d'électrons est généré par un canon lui-même placé sous vide. La formation du capillaire permet un transfert direct de l'énergie au coeur de la matière, permettant ainsi l'obtention de cordons de soudure moins larges que pénétrants. La grande vitesse de soudage permet de produire économiquement en continu des composants soudés par faisceau d'électrons pour des productions industrielles de haute qualité. Du fait de la reproductibilité parfaite des paramètres de soudage, cette technologie est retenue lorsque l'assurance de la qualité exige une traçabilité rigoureuse des paramètres obligatoires.

Ledit soudage à haute énergie pourra également consister en un soudage au laser.
Cette technologie est particulièrement bien adaptée pour effectuer des opérations de soudures étanches et/ou bord à bord. Elle repose sur la concentration en un point d'un faisceau laser, c'est-à-dire une source lumineuse peu divergente et de longueur d'onde bien déterminée. Cette concentration du faisceau appelée aussi focalisation permet d'obtenir au point d'impact des densités de puissance supérieure au MW/cm².
Les principaux avantages sont la vitesse et la précision, l'absence d'apport de matière et de contraintes mécaniques. Toutefois la qualité de la soudure obtenue dépend des précisions de positionnement des pièces à assembler.
Une spécificité intéressante de la soudure au laser est qu'elle se fait sans aucun contact avec la pièce à souder : cela favorise son intégration dans un processus de soudage automatisé.
Le gaz à purifier pourra être de l'hydrogène et/ou un de ses isotopes.

Ladite couche métallique sélectivement perméable audit gaz pourra être une feuille mince métallique par exemple en palladium ou alliage de palladium.

La couche métallique poreuse support est aussi appelée substrat. Elle pourra être réalisée par exemple par frittage de grains de métal tel que l'inconel, le nickel ou l'hastelloy. Ces grains de métal sont en métal réfractaire compatible avec ladite couche métallique sélectivement perméable audit gaz.
On appelle frittage l'opération qui consiste à compacter des poudres puis à chauffer les pièces, ainsi mises en forme, à une température inférieure à la température de fusion du matériau principal afin de créer des liens métallurgiques entre les particules sans pour autant faire fondre le métal ni déformer la pièce.

Ladite membrane de structure composite (comprenant l'ensemble couche métallique sélectivement perméable au gaz à purifier et la couche métallique poreuse support), pourra être d'une épaisseur comprise entre 501 et 2100 µm, avec respectivement 1 à 100 µm pour la couche métallique sélectivement perméable et 500 à 2000 µm pour la couche métallique poreuse. En effet, au-delà de telles épaisseurs, la perméabilité à l'hydrogène à travers cette membrane est limitée par la perte de charge dans le support et en deçà sa rigidité n'est plus suffisante. Ladite couche métallique poreuse support peut être constituée d'un gradient de porosité.

Bien entendu, les coefficients de dilatation thermique des matériaux utilisés dans le dispositif sont voisins les uns des autres.

Un dispositif de purification d'un gaz mettant en oeuvre ledit procédé d'assemblage pourra être couplé à un système produisant le gaz à purifier, le système sera alors connecté en amont du dispositif de purification et/ou à un système, par exemple une pile à combustible, fonctionnant par le moyen de ce gaz pur, connecté en aval du dispositif de purification.
Le dispositif de purification, du fait de sa conception et des moyens de réalisation choisis, peut fonctionner dans des milieux chimiques réactionnels corrosifs et carburants à relativement haute pression et haute température. De ce fait, il est tout à fait utilisable à l'intérieur même de ces systèmes de production de gaz. Ceci permet de tirer partie d'avantages thermocinétiques qui permettent d'augmenter significativement le rendement de production de gaz de tels systèmes.

Des modes d'exécution de l'invention seront décrits ci-après, à titre d'exemples non limitatifs, avec référence aux dessins annexés dans lesquels :
La figure 1 représente une vue en perspective éclatée d'un dispositif selon l'invention, selon un assemblage plan ;
La figure 2 représente une vue en coupe du dispositif de la figure 1 ;
La figure 3 représente une vue en perspective éclatée d'un deuxième dispositif selon l'invention, selon un assemblage tubulaire ;
La figure 4 représente une vue en coupe du dispositif de la figure 3.

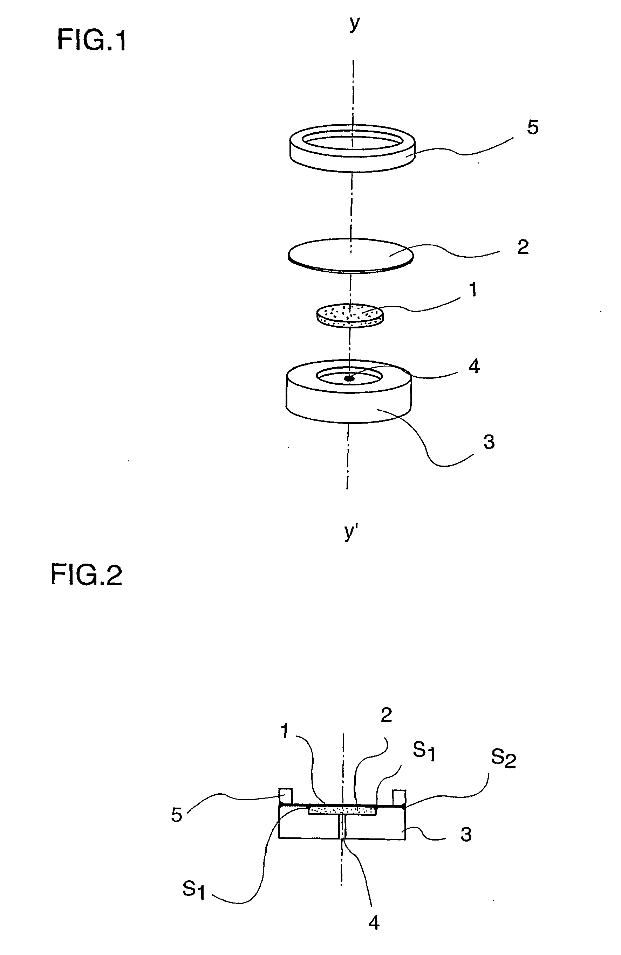

L'exemple de la figure 1 représente un dispositif de purification mettant en oeuvre un procédé d'assemblage d'une membrane d'extraction plane sur un support et comportant :
- une pastille métallique à gradient de porosité poreuse 1 dont les pores ont un diamètre de 0,2 à 50 µm réalisée par frittage de grains fins de métal tel que l'inconel, le nickel ou l'hastelloy.
- une feuille métallique 2 circulaire, mince, laminée, sélectivement perméable au gaz à purifier, par exemple en palladium ou alliage palladium-argent et de diamètre supérieur à celui de la pastille 1,
- un disque métallique 3 par exemple en inconel usiné en creux de manière à recevoir en son centre la pastille poreuse 1, son diamètre extérieur étant strictement égal à celui de la feuille 2 et comportant un orifice tubulaire 4 traversant, axé le long de l'axe longitudinal yy' pour permettre l'évacuation du gaz filtré,
- une bague usinée métallique 5 par exemple en inconel de diamètre extérieur strictement égal à celui du disque 3 et de diamètre intérieur de préférence supérieur à celui de la pastille 1.

L'assemblage et le soudage à haute énergie au moyen d'un faisceau d'électrons sont réalisés selon l'ordre suivant (Figure 2) :
- la pastille poreuse 1 est soudée sur le disque 3 en bord à bord circulaire en réalisant un premier cordon de soudure S₁,
- la feuille 2 est prise en étau entre le disque 3 et la bague 5 et la soudure est réalisée entre ces trois éléments en bord à bord radial en réalisant un deuxième cordon de soudures S₂.

Les paramètres du faisceau sont déterminés par la dimension des pièces, la nature des matériaux à assembler, l'épaisseur et la nature de la membrane.

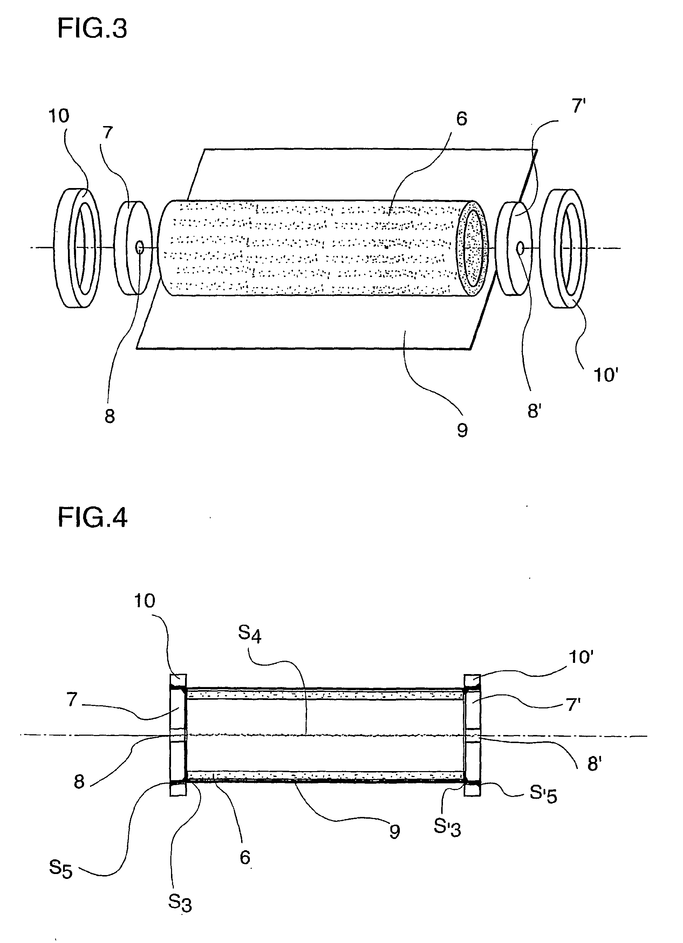

L'exemple de la figure 3 représente un dispositif de purification mettant en oeuvre un procédé d'assemblage d'une membrane d'extraction tubulaire sur un support comportant :
- un tube métallique poreux 6 dont les pores ont un diamètre de 0,2 à 50 µm réalisé par frittage de grains fins de métal tel que l'inconel, le nickel ou l'hastelloy,
- deux disques métalliques 7, 7' par exemple en inconel placés à chaque bout du tube poreux 6 et percés respectivement d'un orifice 8, 8' pour permettre l'évacuation de l'hydrogène purifié et/ou envoyer un gaz vecteur,
- une feuille métallique 9 mince, rectangulaire, laminée, sélectivement perméable au gaz à purifier, par exemple en palladium ou en alliage de palladium de largeur strictement égale au périmètre du tube poreux 6 de manière à recouvrir le tube 6 sur tout son périmètre et de longueur totale égale à l'assemblage tube poreux-disques,
- deux bagues métalliques 10, 10' en inconel de diamètre intérieur strictement égal au diamètre du tube poreux 6 plus l'épaisseur de la feuille 9.

L'assemblage et le soudage à haute énergie au moyen d'un faisceau d'électrons sont réalisés selon l'ordre suivant (Figure 4) :
- chacun des disques 7, 7' est soudé à une extrémité du tube poreux 6 en bord à bord radial en réalisant respectivement un cordon de soudure S₃, S'₃,
- la feuille 9 recouvre l'ensemble constitué par le tube poreux 6 et les disques 7,7', sans jeu et est soudée longitudinalement en bord à bord S₄,
- chacune des bagues métalliques (10,10') est soudée à une extrémité de l'ensemble constitué par le tube poreux 6, la feuille 9 et les disques 7, 7' en bord à bord circulaire en réalisant un cordon de soudure S₅, S'₅.

Le fonctionnement de ce dispositif de purification est le suivant : le mélange de gaz se situe à l'extérieur du dispositif et le gaz auquel la membrane est sélectivement perméable circule de l'extérieur vers l'intérieur du tube poreux 6 et ledit gaz ressort purifié par les orifices 8, 8' des disques 7, 7' situés aux extrémités du tube.

Il est à noter que, dans une variante, un seul des disques 7' peut être percé de façon à évacuer le gaz par une seule extrémité du tube 6.

Les assemblages ainsi réalisés peuvent être soudés directement à un réacteur chimique dans lequel passe le gaz à purifier.

## Revendications

1. Assemblage d'une membrane de purification d'un gaz sur un support, ladite membrane comprenant au moins une couche métallique poreuse support (1, 6) et au moins une couche métallique (2, 9) sélectivement perméable audit gaz recouvrant la couche poreuse au moins sur une face et s'étendant au-delà de cette couche poreuse support,
ledit support comprenant au moins deux pièces métalliques usinées de maintien de la membrane (3, 5, 7, 7', 10, 10'),
**caractérisé en ce que** la couche métallique (2, 9) sélectivement perméable est prise en étau entre les deux pièces métalliques usinées (3, 5, 7, 7', 10, 10') et **en ce qu'**il comprend un premier cordon de soudure (S1, S3, S'3) de type bord à bord à haute énergie entre l'une des pièces usinées (3) et une extrémité de la couche poreuse support (1) et un deuxième cordon de soudure (S2, S5, S'5), de type bord bord à haute énergie entre les deux pièces usinées (3, 5, 7, 7', 10, 10') et une zone de la couche métallique sélectivement perméable (2, 9) dépassant la couche poreuse support (1) entre lesdites pièces usinées (3, 5, 7, 7', 10, 10').

2. Assemblage selon la revendication 1,
**caractérisé en ce que** lesdites soudures sont de type à haute énergie par un faisceau d'électrons.

3. Assemblage selon la revendication 1,
**caractérisé en ce que** lesdites soudures sont de type à haute énergie par laser.

4. Assemblage selon la revendication 1,
**caractérisé en ce que** ladite couche métallique sélectivement perméable audit gaz est une feuille mince métallique (2, 9).

5. Assemblage selon la revendication 4,
**caractérisé en ce que** ladite feuille métallique (2, 9) est en palladium ou en alliage de palladium.

6. Assemblage selon la revendication 1,
**caractérisé en ce que** ladite couche métallique poreuse support (1, 6) est constituée par un frittage de grains de métal.

7. Assemblage selon la revendication 6,
**caractérisé en ce que** lesdits grains de métal sont en métal réfractaire tel que le Nickel, l'Inconel ou l'Hastelloy, compatible avec ladite couche métallique sélectivement perméable audit gaz.

8. Procédé d'assemblage selon la revendication 1,
**caractérisé en ce que** ladite couche métallique sélectivement perméable audit gaz est d'une épaisseur comprise entre 1 et 100 µm.

9. Assemblage selon la revendication 1,
**caractérisé en ce que** les coefficients de dilatation thermique des matériaux utilisés sont voisins les uns des autres.

10. Assemblage selon la revendication 1,
**caractérisé en ce que** ledit dispositif de purification d'un gaz est couplé de façon externe et/ou interne à un système de production de gaz nécessitant une purification et/ou à un système exigeant une alimentation en gaz pur.

11. Assemblage selon la revendication 1 utilisé dans un dispositif de purification d'un gaz,
**caractérisé en ce qu'**il comporte:
- une pastille métallique poreuse (1) dont les pores un diamètre compris entre 0,2 et 50 µm réalisée par frittage de grains fins,
- une feuille mince métallique (2) circulaire, laminée, sélectivement perméable audit gaz à purifier de diamètre supérieur à celui de la pastille (1),
- un disque métallique usiné en creux (3) de manière à recevoir en son centre la pastille poreuse (1), son diamètre extérieur étant strictement égal à celui de la feuille (2) et comportant un orifice tubulaire (4) traversant axé le long de l'axe longitudinal (yy') pour permettre l'évacuation du gaz filtré, la pastille poreuse (1) étant soudée sur ce disque (3) en bord à bord circulaire,
- une bague métallique usinée (5) de diamètre extérieur strictement égal à celui du disque (3) et de diamètre intérieur de préférence supérieur à celui de la pastille (1), la feuille (2) étant disposée entre le disque (3) et la bague (5), et la feuille (2), le disque (3) et la bague (5) étant soudés en bord à bord radial.

12. Assemblage selon la revendication 1 utilisé dans un dispositif de purification d'un gaz,
**caractérisé en ce qu'**il comporte :
- un tube métallique poreux (6) dont les pores ont un diamètre compris entre 0,2 et 50 µm réalisé par frittage de grains fins de métal,
- deux disques métalliques (7, 7') respectivement soudés en bord à bord radial à chaque bout du tube poreux (6) et percés respectivement d'un orifice (8, 8') pour permettre l'évacuation de l'hydrogène purifié et/ou envoyer un gaz vecteur,
- une feuille mince métallique (9) rectangulaire, laminée, sélectivement perméable audit gaz à purifier de largeur strictement égale au périmètre du tube poreux (6) conformée de manière à recouvrir le tube (6) sur tout son périmètre et de longueur totale égale à l'assemblage tube poreux-disques, cette feuille (9) recouvrant l'ensemble constitué par le tube poreux (6) et les disques (7, 7') et est soudée en bord à bord longitudinal.
- deux bagues métalliques (10, 10') de diamètre intérieur strictement égal au diamètre du tube poreux (6) plus l'épaisseur de la feuille (9), chacune de ces bagues métalliques (10,10') étant soudée à une extrémité de l'ensemble constitué par le tube poreux (6), la feuille (9) et les disques (7, 7') en bord à bord circulaire.

13. Assemblage selon la revendication 12,
**caractérisé en ce qu'**un seul desdits disques métalliques est percé d'un orifice.

14. Assemblage selon l'une des revendications 11 et12,
**caractérisé en ce que** la susdite feuille est sélectivement perméable à l'hydrogène.

## Claims

1. An assembly with a gas purification membrane on a support, said membrane comprising at least one porous metal support layer (1, 6) and at least one metal layer (2, 9) selectively permeable to said gas covering the porous layer at least on one face and extending beyond this porous support layer,
said support comprising at least two machined metal pieces for maintaining the membrane (3, 5, 7, 7', 10, 10'),
**characterized in that** the selectively permeable metal layer (2, 9) is held in vice between the two machined metal pieces (3, 5, 7, 7', 10, 10') and **in that** it comprises a first high-energy edge-to-edge seam weld (S1, S3, S'3) between one of the machined pieces (3) and one end of the porous support layer (1) and a second high-energy edge-to-edge seam weld (S2, S5, 8'5) between the two machined pieces (3, 5, 7, 7', 10, 10') and a zone of the selectively permeable metal layer (2, 9) exceeding the porous support layer (1) between said machined pieces (3, 5, 7, 7', 10, 10').

2. The assembly according to claim 1,
**characterized in that** said welds are high-energy electron beam welds.

3. The assembly according to claim 1,
**characterized in that** said welds are high-energy laser welds.

4. The assembly according to claim 1,
**characterized in that** said metal layer selectively permeable to said gas is a thin metal sheet (2, 9).

5. The assembly according to claim 4,
**characterized in that** said metal layer (2, 9) is made in palladium or palladium alloy.

6. The assembly according to claim 1,
**characterized in that** said porous metal support layer (1, 6) is made up of sintered metal grains.

7. The assembly according to claim 6,
**characterized in that** said metal grains are in a refractory metal such as Nickel, Inconel or Hastelloy, compatible with said metal layer selectively permeable to said gas.

8. The assembly method according to claim 1,
**characterized in that** said metal layer selectively permeable to said gas has a thickness between 1 and 100 µm,

9. The assembly according to claim 1,
**characterized in that** the thermal expansion coefficients of the materials used are in the vicinity of each other.

10. The assembly according to claim 1,
**characterized in that** said gas purification device is coupled externally and/or internally to a production system for a gas requiring purification and/or a system requiring a supply of pure gas.

11. The assembly method according to claim 1 used in a gas purification device,
**characterized in that** it comprises:
- a porous metal chip (1) whereof the pores have a diameter between 0.2 and 50 µm realized by sintering of fine grains,
- a thin laminated circular metal sheet (2), selectively permeable to said gas to be purified with a diameter larger than that of the chip (1),
- a metal disc (3) machined hollow so as to receive, in its center, the porous chip (1), its outer diameter being strictly equal to that of the sheet (2) and comprising a tubular through orifice (4) centered along the longitudinal axis (yy') in order to allow the evacuation of the filtered gas, the porous chip (1) being circularly edge-to-edge welded on this disc (3),
- a machined metal ring (5) with an outer diameter strictly equal to that of the disc (3) and with an inner diameter preferably larger than that of the chip (1), the sheet (2) being arranged between the disc (3) and the ring (5), and the sheet (2), the disc (3) and the ring (5) being radially edge-to-edge welded.

12. The assembly according to claim 1 used in a gas purification device, **characterized in that** it comprises:
- a porous metal tube (6) whereof the pores have a diameter between 0.2 and 50 µm realized by sintering of fine metal grains,
- two metal discs (7, 7') respectively radially edge-to-edge welded to each end of the porous tube (6) and respectively pierced with an orifice (8, 8') to allow the evacuation of the purified hydrogen and/or to send a carrier gas,
- a thin rectangular laminated metal sheet (9), selectively permeable to said gas to be purified with a width strictly equal to the perimeter of the porous tube (6) configured so as to cover the tube (6) over its entire perimeter and with a total length equal to the porous tube-discs assembly, this sheet (9) covering the assembly made up of the porous tube (6) and the discs (7, 7') and is longitudinally edge-to-edge welded,
- two metal rings (10, 10') with an inner diameter strictly equal to the diameter of the porous tube (6) plus the thickness of the sheet (9), each of these metal rings (10, 10') being circularly edge-to-edge welded to one end of the assembly made up of the porous tube (6), the sheet (9) and the discs (7, 7).

13. The assembly according to claim 12,
**characterized in that** only one of said metal discs is pierced with an orifice.

14. The assembly according to one of claims 11 and 12,
**characterized in that** the aforementioned sheet is selectively permeable to hydrogen.

## Patentansprüche

1. Anordnung einer Membran zum Reinigen eines Gases auf einem Träger, wobei die Membran mindestens eine poröses Metallträgerschicht (1, 6) und mindestens eine Metallschicht (2, 9) umfasst, die für das Gas selektiv durchlässig ist, die die poröse Schicht mindestens auf einer Seite bedeckt und sich über diese poröse Trägerschicht hinaus erstreckt,
wobei der Träger mindestens zwei bearbeitete Metallteile zum Halten der Membran (3, 5, 7, 7', 10, 10') umfasst,
**dadurch gekennzeichnet, dass** die selektiv durchlässige Metallschicht (2, 9) zwischen den beiden bearbeiteten Metallteilen (3, 5, 7, 7', 10, 10') angeklemmt ist, und **dadurch**, dass sie eine erste Schweißnaht (S1, S3, S'3) vom Typ Hochenergieschweißnaht Kante an Kante zwischen dem einen der bearbeiteten Teile (3) und einem Ende der porösen Trägerschicht (1) und eine zweite Schweißnaht (S2, S5, S'5) vom Typ Hochenergieschweißnaht Kante an Kante zwischen den beiden bearbeiteten Teilen (3, 5, 7, 7', 10, 10') und eine Zone der selektiv durchlässigen Metallschicht (2, 9) umfasst, die über die poröse Trägerschicht (1) zwischen den bearbeiteten Teilen (3, 5, 7, 7', 10, 10') hinausgeht.

2. Anordnung nach Anspruch 1,
**dadurch gekennzeichnet, dass** die Schweißnähte Hochenergie-Elektronenstrahlschweißnähte sind.

3. Anordnung nach Anspruch 1,
**dadurch gekennzeichnet, dass** die Schweißnähte Hochenergie-Laserschweißnähte sind.

4. Anordnung nach Anspruch 1,
**dadurch gekennzeichnet, dass** die für das Gas selektiv durchlässige Metallschicht eine dünne Metallfolie (2, 9) ist.

5. Anordnung nach Anspruch 4,
**dadurch gekennzeichnet, dass** die Metallfolie (2, 9) aus Palladium oder einer Palladiumlegierung ist.

6. Anordnung nach Anspruch 1,
**dadurch gekennzeichnet, dass** die poröse Metallträgerschicht (1, 6) durch ein Sintern von Metallkörnern gebildet wird.

7. Anordnung nach Anspruch 6,
**dadurch gekennzeichnet, dass** die Metallkörner aus refraktärem Metall sind, wie etwa Nickel, Inconel oder Hastelloy, das mit der für das Gas selektiv durchlässigen Metallschicht kompatibel ist.

8. Verfahren zum Anordnen nach Anspruch 1,
**dadurch gekennzeichnet, dass** die für das Gas selektiv durchlässige Metallschicht eine Dicke im Bereich zwischen 1 et 100 µm aufweist.

9. Anordnung nach Anspruch 1,
**dadurch gekennzeichnet, dass** die Koeffizienten der thermischen Ausdehnung der verwendeten Materialien nahe beieinander liegen.

10. Anordnung nach Anspruch 1,
**dadurch gekennzeichnet, dass** die Vorrichtung zur Reinigung eines Gases auf externe und/oder interne Weise an ein System zur Produktion von Gas, das eine Reinigung benötigt und/oder an ein System, das eine Versorgung mit reinem Gas erfordert, gekoppelt ist.

11. Anordnung nach Anspruch 1, die in einer Vorrichtung zur Reinigung eines Gases verwendet wird,
**dadurch gekennzeichnet, dass** sie umfasst:
- ein poröses Metallplättchen (1) dessen Poren einen Durchmesser im Bereich zwischen 0,2 und 50 µm aufweisen, das durch Sintern feiner Körner realisiert wurde,
- eine dünne kreisförmige laminierte Metallfolie (2), die für das zu reinigende Gas selektiv durchlässig ist, mit einem Durchmesser, der größer ist als der des Plättchens (1),
- eine Metallscheibe (3), die mit einer Vertiefung versehen ist, um in ihrer Mitte das poröse Plättchen (1) aufzunehmen, wobei ihr Außendurchmesser exakt gleich dem der Folie (2) ist und eine röhrenförmige Öffnung (4) umfasst, die sie ausgerichtet entlang der Längsachse (yy') durchquert, um die Ableitung des gefilterten Gases zu ermöglichen, wobei das poröse Plättchen (1) auf diese Scheibe (3) kreisförmig Kante an Kante geschweißt ist,
- einen bearbeiteten Metallring (5) mit einem Außendurchmesser, der exakt gleich dem der Scheibe (3) ist und einem Innendurchmesser, der bevorzugt größer als der des Plättchens (1) ist, wobei die Folie (2) zwischen der Scheibe (3) und dem Ring (5) angeordnet ist, und die Folie (2), die Scheibe (3) und der Ring (5) radial Kante an Kante geschweißt sind.

12. Anordnung nach Anspruch 1, die in einer Vorrichtung zur Reinigung eines Gases verwendet wird,
**dadurch gekennzeichnet, dass** sie umfasst:
- ein poröses Metallrohr (6) dessen Poren einen Durchmesser im Bereich zwischen 0,2 und 50 µm aufweisen, das durch Sintern feiner Metallkörner realisiert wurde,
- zwei Metallscheiben (7, 7'), die jeweils an jedem Ende des porösen Rohrs (6) radial Kante an Kante geschweißt sind und jeweils von einer Öffnung (8, 8') durchdrungen sind, um die Ableitung des gereinigten Wasserstoffs zu ermöglichen und/oder ein Trägergas hindurch zu schicken,
- eine dünne rechteckige laminierte Metallfolie (9), die für das zu reinigende Gas selektiv durchlässig ist, mit einer Breite, die exakt gleich dem Umfang des porösen Rohrs (6) ist, die derart angepasst ist, dass sie das Rohr (6) auf seinem gesamten Umfang bedeckt und mit einer Gesamtlänge gleich derjenigen der Anordnung aus dem Rohr und den porösen Scheiben, wobei diese Folie (9) den Aufbau bedeckt, der durch das poröse Rohr (6) und die Scheiben (7, 7') gebildet wird, und in Längsrichtung Kante an Kante aufgeschweißt ist,
- zwei Metallringe (10, 10') mit einem Innendurchmesser, der exakt gleich dem Durchmesser des porösen Rohrs (6) plus der Dicke der Folie (9) ist, wobei jeder dieser Metallringe (10, 10') an einem Ende des Aufbaus, der aus dem porösen Rohr (6), der Folie (9) und den Scheiben (7, 7') gebildet wird, kreisförmig Kante an Kante aufgeschweißt ist.

13. Anordnung nach Anspruch 12,
**dadurch gekennzeichnet, dass** nur eine der Metallscheiben von einer Öffnung durchdrungen ist.

14. Anordnung nach einem der Ansprüche 11 und 12,
**dadurch gekennzeichnet, dass** die Folie selektiv für Wasserstoff durchlässig ist.
